# EUROPEAN PATENT APPLICATION

(11) **EP 4 691 219 A1**
(43) Date of publication of application: **11.02.2026**
(21) Application number: 25189227.9
(22) Date of filing: 14.07.2025
(51) Int. Cl.: A01C 7/06, A01C 21/00, A01C 23/00, A01M 7/00, A01B 79/00

(54) **AGRICULTURAL MACHINE AND METHOD WITH SUCH**

(30) Priority: 09.08.2024 US 202418799632
(71) Applicant: Deere & Company, Moline, IL 61265 (US)
(72) Inventor: MARX, SAMUEL E, 68163 Mannheim (DE); RUBY, JORDAN J, 68163 Mannheim (DE); HUBNER, CARY S, 68163 Mannheim (DE); OLSON, DOUGLAS J, 68163 Mannheim (DE); BHATOL, MAHESHKUMAR K, 68163 Mannheim (DE); KUMAR, PRASHANT, 68163 Mannheim (DE); ISSRANI, MANOJ, 68163 Mannheim (DE)
(74) Representative: Reichert, Christian

(57) **Abstract**

An agricultural machine (100) is disclosed. The agricultural machine (100) comprising: an applicator (109) that has an actuator (254) that is actuated to control application of liquid material to a surface (406) over which the agricultural machine travels; a ground speed sensor (304) configured to detect ground speed (328) of the agricultural machine and generate a ground speed signal indicative of the ground speed; and a control system (113) configured identify a target application pattern (260) for the liquid material and generate a pulse width modulated actuator control signal (702), to control the actuator, at a switching frequency (322) based on the ground speed signal and the target application pattern. Further, a method with such agricultural machine (100) is disclosed.

## Description

### FIELD OF THE DESCRIPTION

The present description relates to agricultural machines. More specifically, the present description relates to controlling application of material to a field, using an agricultural machine.

### BACKGROUND

There is a wide variety of different types of agricultural machines that apply material to an agricultural field. Some such agricultural machines include sprayers, tillage machines with side dressing bars, air seeders, and planters that have row units, among others.

As one example, a row unit is often mounted to a planter with a plurality of other row units. The planter is often towed by a tractor over soil where seed is planted in the soil, using the row units. The row units on the planter follow the ground profile by using a combination of a down force assembly that imparts a down force to the row unit to push disk openers into the ground and gauge wheels to set depth of penetration of the disk openers.

Row units can also be used to apply material to the field (e.g., fertilizer to the soil, to a seed, etc.) over which the row units are traveling. In some scenarios, each row unit has a valve that is coupled between a source of material to be applied, and an application assembly. As the valve is actuated, the material passes through the valve, from the source to the application assembly, and is applied to the field.

Many current systems apply the material in a substantially continuous way. For instance, where the application machine is applying a liquid fertilizer, the application machine actuates the valve to apply a substantially continuous strip of the liquid fertilizer (sometimes referred to as a broadcast application pattern). The same is true of materials that provide other liquid substances, or granular substances, as examples.

The discussion above is merely provided for general background information and is not intended to be used as an aid in determining the scope of the claimed subject matter.

### SUMMARY

An application device on an agricultural machine includes an actuator that is controlled using a pulsed control signal. The actuator actuates a valve. The ground speed of the agricultural machine is detected and the frequency of actuation is controlled to apply material to the field based on the ground speed.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a top view of one example of a planting machine, shown in a partial pictorial and partial schematic form.
FIG. 2 shows a block diagram of one example of a portion of an agricultural system.
FIG. 3 shows a block diagram of one example of a portion of an agricultural system.
FIG. 4 shows a block diagram of one example of a portion of an agricultural system.
FIG. 5 shows a block diagram of one example of a portion of an agricultural system.
FIG. 6 is a side view showing one example of a row unit of the planting machine illustrated in FIG. 1.
FIG. 7 is a side view showing another example of a row unit of the planting machine illustrated in FIG. 1.
FIG. 8 is a side view showing another example of a row unit of the planting machine illustrated in FIG. 1.
FIG. 9 is a perspective view of a portion of a seed metering system.
FIG. 10 shows an example of a seed delivery system that can be used with a seed metering system.
FIG. 11 shows another example of a delivery system that can be used with a seed metering system.
FIG. 12 is a view of an application unit.
FIG. 13 is an enlarged view of a portion of a row unit of the planting machine illustrated in FIG. 7.
FIGS. 14A and 14B are views of different examples of a sprayer.
FIG. 15 shows an example of a spray angle from a spray tip on a nozzle.
FIGS. 16, 17, 18, and 19 show examples of application patterns.
FIG. 20 is a block diagram showing one example of a material application control system.
FIG. 21 is a flow diagram illustrating one example of the operation of the material application control system shown in FIG. 20.
FIG. 22 shows one example of the architecture illustrated in FIG. 1, deployed in a remote server environment.
FIGS. 23, 24, and 25 show examples of mobile devices that can be used as operator interface mechanisms in the architectures shown in the previous Figures.
FIG. 26 is a block diagram showing one example of a computing environment that can be used in the architectures shown in the previous Figures.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, many current systems apply material to a field. Some systems that apply material to a field include a set of actuators that actuate a set of valves or nozzles. The material to be applied to the field (which may be liquid) is pumped from a tank to the valves or nozzles through supply lines. A control system controls the actuators to actuate the valves or nozzles (to open and/or close the valves or nozzles) to allow the material under pressure to flow through the valves or nozzles onto the field.

The actuators are controlled by an actuator control signal. The actuator control signal is controlled to a particular switching frequency and the flow rate through the valve or nozzle is also based upon the duty cycle, which controls the amount of time the valve is open and closed. In some cases, the actuator and nozzle are configured as a discrete application device in which case the valve or nozzle is not opened on a continuous basis to apply material. Instead, the actuator control signal for controlling the actuator to each valve or nozzle is a pulse width modulated control signal.

In current systems, the flow rate or quantity of material applied to the field is controlled by varying the duty cycle of the pulse width modulated actuator control signal and the switching frequency is held fixed. However, this can present problems. For example, it may be desirable to apply some material as a continuous strip of material to the furrow or row in the field. This problem can be difficult with a discrete application device. This can be particularly exacerbated where the ground speed of the agricultural machine varies as the machine moves along the field. If the machine moves too quickly, this can result in gaps in the applied material, whereas if the agricultural machine moves too slowly, this can result in over-application of material to the field.

The present description thus proceeds with respect to a system that senses the ground speed of the agricultural machine and obtains a desired application pattern which identifies how the material is to be applied to the field. A control system controls the switching frequency of the pulse width modulated control signal that controls the actuator, based upon the ground speed of the agricultural machine and the desired application pattern.

Also, the present description proceeds with respect to the examples being deployed on a row unit of a planter. The examples could just as easily be deployed on a tillage machine with a side-dress bar, on a sprayer, or other piece of agricultural equipment that is used to apply a material.

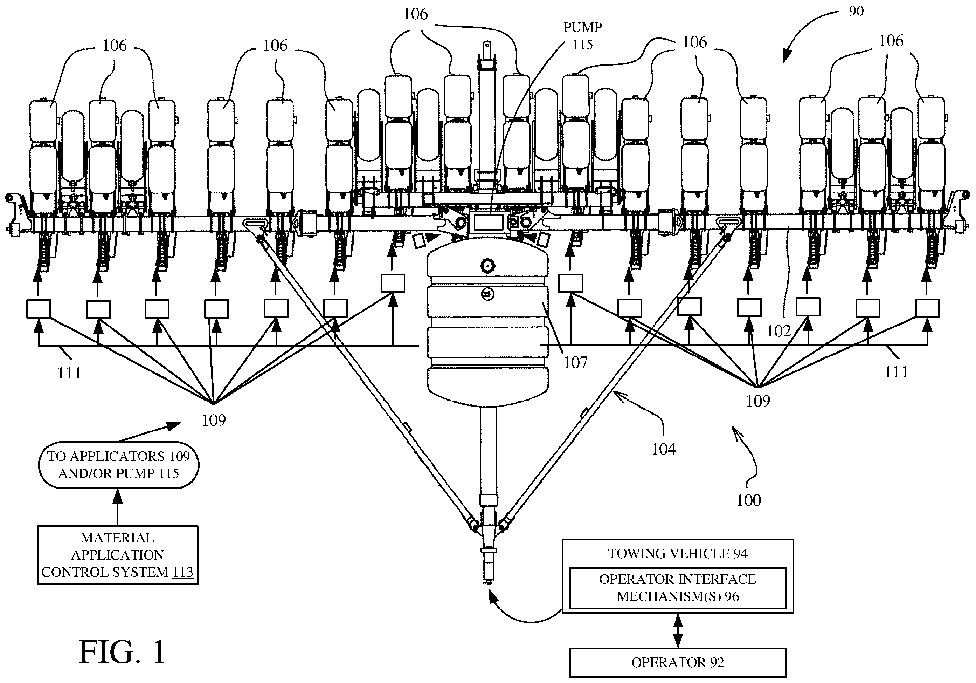

FIG. 1 is a partial pictorial, partial schematic top view of one example of an agricultural system 90 that includes agricultural planting machine 100, towing vehicle 94, that is operated by operator 92, and material application control system 113, which can be on one or more individual parts of machine 100, centrally located on machine 100, remotely located, or located on towing vehicle 94. Operator 92 (which can be a manual operator or an automated operator or a semi-automated operator) can illustratively interact with operator interface mechanisms 96 to manipulate and control vehicle 94, system 113, and some or all portions of machine 100. Machine 100 is a row crop planting machine that illustratively includes a toolbar 102 that is part of a frame 104. FIG. 1 also shows that a plurality of planting row units 106 are mounted to the toolbar 102. Machine 100 can be towed behind towing vehicle 94, such as a tractor. FIG. 1 shows that material can be stored in a tank 107 (or material(s) can be stored in a plurality of tanks) and pumped through one or more supply lines 111 so the material can be dispensed or applied in or near the rows being planted. In one example, a set of applicators 109 is provided to perform the application operation. For instance, applicators 109 can include individual pumps that service individual row units 106 and that pump material from tank(s) 107 through supply line(s) 111 so the material(s) can be dispensed on the field. In such an example, material application control system 113 controls the pumps 109. Also, applicators 109 can include actuators that actuate valves or nozzles and one or more pumps 115 pump the material from tank(s) 107 to the valves or nozzles through supply line(s) 111. In such an example, material application control system 113 controls the actuators by generating actuator control signals to apply material according to a desired pattern, e.g., to apply a continuous strip of material, to apply material in an overlapping pattern, to apply material in a spaced pattern (e.g. on a per-seed basis), or in other ways.

The control signal for each actuator can, in one example, be a pulse width modulated control signal. The flow rate through the corresponding valve or nozzle can be based on the duty cycle of the control signal (which controls the amount of time the valve is open and closed) and based on the switching frequency. Further, the material can be applied at varying rates on a per-seed or per-plant basis. For example, fertilizer may be applied at one rate when it is being applied at a location spaced from a seed location and at a second, higher, rate when it is being applied closer to the seed location. Thus, the switching frequency of the control signal can be varied to apply material according to the desired application pattern. Also, in one example, the ground speed of towing vehicle 94 or planter 100 can be detected and the switching frequency of the control signal can be varied based on the detected ground speed to maintain the desired application pattern at different speeds. Also, in one example, multiple applicators 109 are provided on each row unit 106 so that one or more materials can be applied by one applicator 109 relative to the furrow according one application pattern (e.g., continuously) and by another applicator 109 according to another application pattern (e.g., intermittently) or at a second rate. These are examples only.

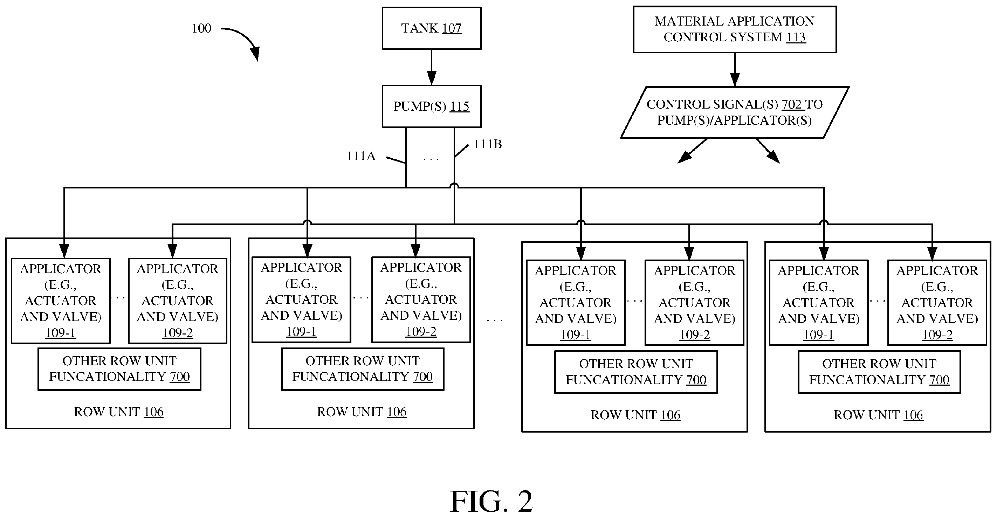

While the present description applies to an architecture in which a single applicator 109 is on each row unit 106, FIGS. 2-5 show different architectures in which applicators 109 can be disposed in different places, in which there can be multiple different materials applied by each row unit 106, and/or in which a single material can be applied, using one or more different applicators to apply that material at different rates in the field location (e.g., in the same furrow). In the example shown in FIG. 2, an architecture for machine 100 is illustrated in which a single tank 107 holds material that is pumped by one or more pumps 115 through a plurality of different supply lines (labeled 111A-111B in FIG. 2) to a plurality of different applicators (e.g., an actuator and a valve or nozzles) 109 on each row unit 106. Each row unit 106 shows a plurality of applicators 109 (labeled 109-1 to 109-2), along with other row unit functionality 700 some of which is described in greater detail elsewhere herein. FIG. 2 also shows that material application control system 113 can generate control signals 702 which are provided to control the different applicators 109 on the different row units 106. In the example shown in FIG. 2, material is pumped by pump(s) 115 through supply line 111A to a first applicator 109-1 on each row unit 106. Also, pump(s) 115 provide the same material through a supply line 111B to a second applicator 109-2 on each of the row units 106. Therefore, material application control system 113 can generate control signals 702 with different switching frequencies to independently control the individual applicators 109-1 and 109-2 independently of one another on each of the row units 106 so that the material from tank 107 can be applied according to a first application pattern (e.g., continuously in a furrow) using applicator 109-1 and according to a second application pattern (e.g., intermittently based upon seed position in the furrow) using applicator 109-2. Also, it will be appreciated that, in one example, the individual applicators 109-1 can be independently controlled with respect to one another so that applicator 109-1 on one row unit 106 may be controlled independently with respect to the applicator 109-1 on a different row unit. The same can be true of applicators 109-2.

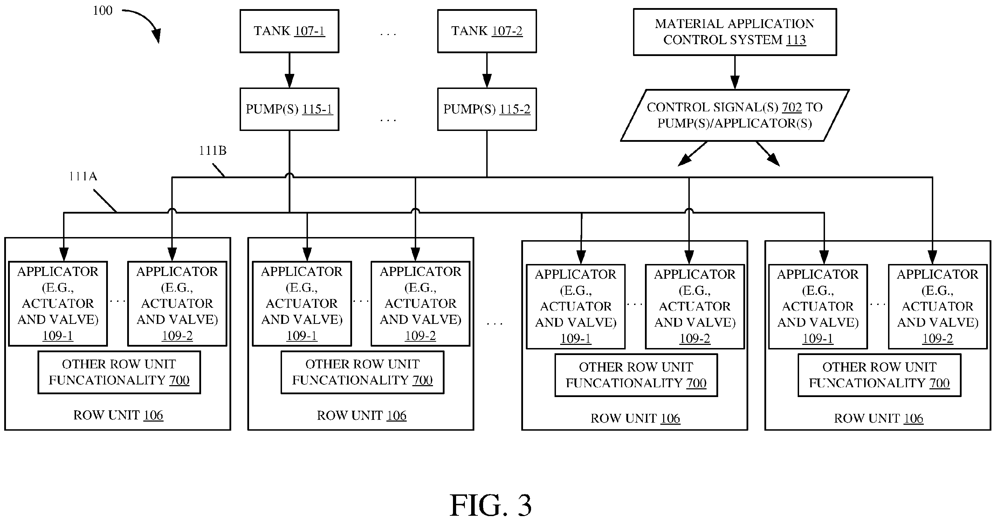

FIG. 3 shows another example of an architecture for machine 100 in which a plurality of different tanks 107-1 through 107-2 are each provided with a set of pumps 115-1 through 115-2. Some items in FIG. 3 are similar to those shown in FIG. 2, and those items are similarly numbered. Therefore, a different material can be stored in each of the tanks 107-1 through 107-2. Pump 115-1 can pump the material from tank 107-1 to the applicators 109-1 in each of the row units 106 while pumps 115-2 can pump the material from tank 107-2 to supply line 111B to the applicators 109-2 on each of the row units 106.

Thus, material application control system 113 can generate control signals 702 to independently control the pumps 115-1 through 115-2 and the applicators 109-1 through 109-2 so that the material from tank 107-1 can be applied in the furrow opened by a given row unit 106 at one rate or according to one application pattern while the material in tank 107-2 can be applied by the same row unit 106 at a second rate or according to a second application pattern. Again, for example, the material in tank 107-1 can be applied continuously while the material from tank 107-2 can be applied intermittently, or vice versa.

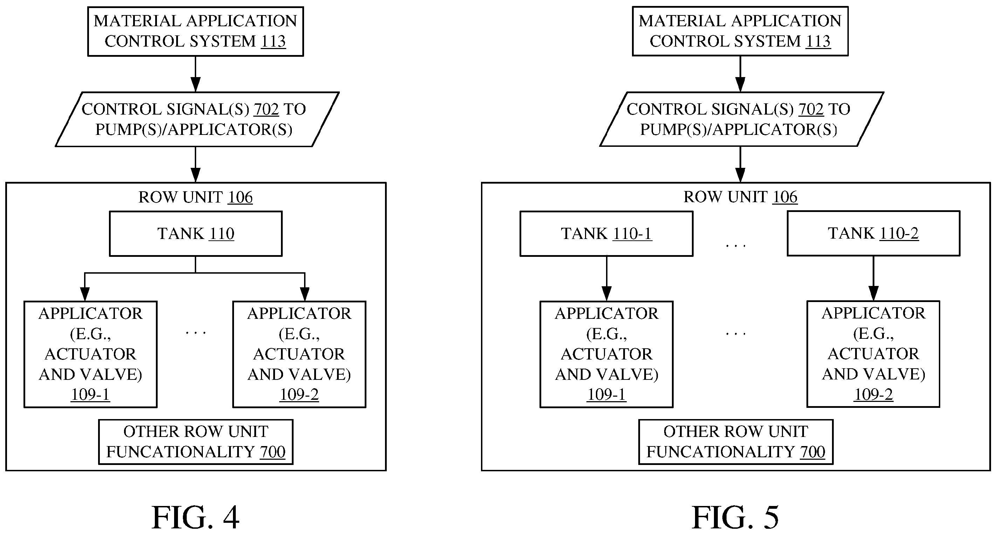

FIG. 4 shows another example in which a row unit 106, itself, has a tank 110 that stores material that is to be applied by applicators 109-1 through 109-2. Because each row unit 106 has a plurality of different, independently controllable, applicators 109-1 through 109-2, the material from tank 110 (carried by row unit 106) can be applied at different rates by the different applicators 109-1 to 109-2. Material application control system 113 generates control signals 702 to control the applicators 109-1 through 109-2 independently of one another, so that the material in tank 110 can be applied at different rates, or using different application patterns. While FIG. 4 shows only a single row unit 106, the plurality of row units on machine 100 described above can be arranged similarly to that shown in FIG. 4.

FIG. 5 shows an arrangement in which each row unit 106 has a plurality of tanks 110-1 through 110-2. Tank 110-1 may carry a different material from tank 110-2. The material from tank 110-1 can be applied using applicator 109-1 while the material from tank 110-2 can be applied using applicator 109-2. Therefore, material application control system 113 can generate control signals 702 to control the applicators 109-1 through 109-2 independently of one another such that the different materials (stored in tanks 110-1 through 110-2) can be applied at different rates or according to different application patterns with respect to one another.

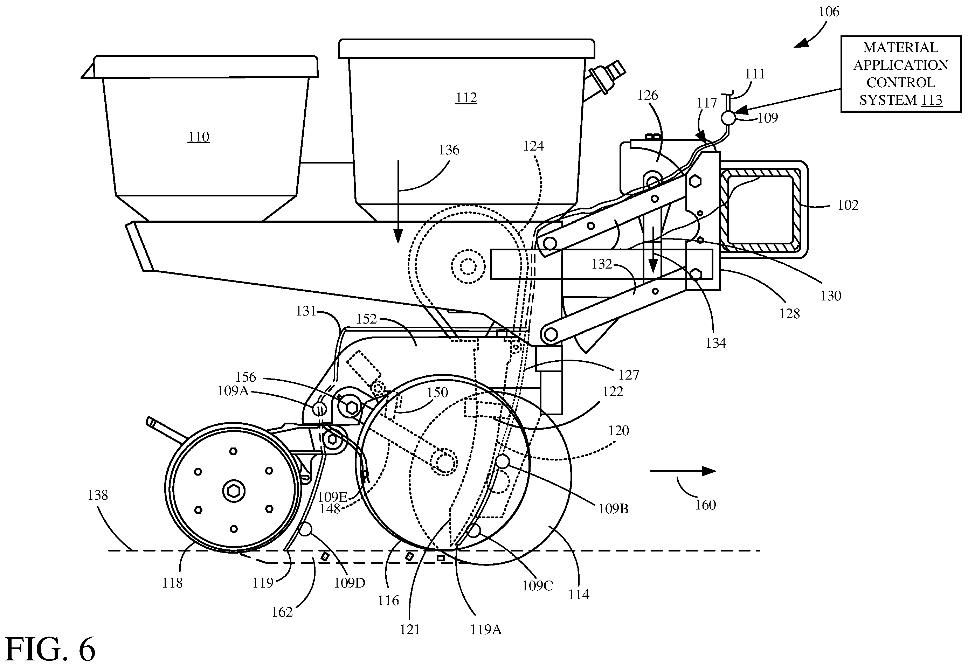

Some examples of the functionality on row units 106 will now be described with respect to FIGS. 6-13.

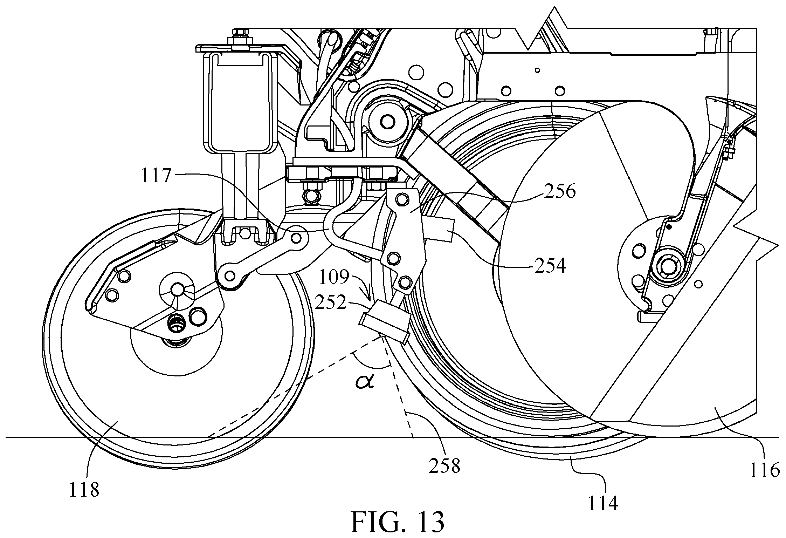

FIG. 6 is a side view of one example of a row unit 106, with applicator 109 and system 113 shown as well. One more detailed example of applicator 109 is described below with respect to FIG. 13. FIG. 6 shows that applicator 109 can be in six possible locations labeled as 109, 109A, 109B, 109C, 109D, and 109E. It will be appreciated that row unit 106 will illustratively have a plurality of independently controllable applicators 109 (such as applicators 109-1 to 109-2 shown elsewhere herein) that can be each located at one or more of the different locations indicated by numbers 109-109E or at other locations on row unit 106. Row unit 106 illustratively includes a chemical tank 110 and a seed storage tank 112. Row unit 106 also illustratively includes one or more disc openers 114, a set of gauge wheels 116, and a set of closing wheels 118. Seeds from tank 112 are fed into a seed meter 124, e.g., by gravity or from a centralized commodity distribution system (e.g., exploiting pneumatic commodity distribution to each row unit). The seed meter 124 controls the rate at which seeds are dropped into a seed tube 120 or other seed delivery system, such as a brush belt or flighted belt (shown in other FIGS.), from seed storage tank 112. The seeds can be sensed by a seed sensor 122.

In the example shown in FIG. 6, liquid material is passed, e.g., pumped or otherwise forced, through one or more supply lines 111 to an inlet end of each applicator 109. Each applicator 109 is controlled by control system 113 to allow the liquid to pass from the inlet end of applicator 109 to an outlet end. Material application control system 113 senses the ground speed of row unit 106 (e.g., by sensing the ground speed of towing vehicle 94 or in another way) and varies the switching frequency of the pulse width modulated control signal controlling applicator 109 based on the ground speed to maintain a desired application switching pattern. One example of the application of material through an applicator 109 will be discussed but it will be appreciated that the row unit 106 may have a plurality of independently controllable applicators 109 so one or more materials can be applied at different rates or according to different application patterns (e.g., continuously, overlapping, intermittently, etc.). By mentioning that the different applicators are actuated to apply material according to a different application pattern it is meant, for example, that one applicator is controlled to apply material at a different rate than another applicator, or that one applicator applies material according to one spatial pattern (such as continuously, or overlapping) that is different from a spatial pattern with which another applicator applies material (such as intermittently).

As liquid passes through each applicator 109, the liquid travels through an application assembly 117 from a proximal end (which is attached to an outlet end of each applicator 109) to a distal tip (or application tip) 119, where the liquid is discharged into a trench, or proximate a trench or furrow 162, opened by disc opener 114 (as is described in more detail elsewhere).

Some parts of row unit 106 will now be discussed in more detail. First, it will be noted that there are different types of seed meters 124, and the one that is shown is shown for the sake of example only and is described in greater detail below. However, in one example, each row unit 106 need not have its own seed meter. Instead, metering or other singulation or seed dividing techniques can be performed at a central location, for groups of row units 106. The metering systems can include finger pick-up discs and/or vacuum meters (e.g., having rotatable discs, rotatable concave or bowl-shaped devices), among others. The seed delivery system can be a gravity drop system (such as seed tube 120 shown in FIG. 6) in which seeds are dropped through the seed tube 120 and fall (via gravitational force) through the seed tube and out the outlet end 121 into the seed trench 162. Other types of seed delivery systems may be or may include assistive systems, in that they do not simply rely on gravity to move the seed from the metering system into the ground. Instead, such assistive systems actively assist the seeds in moving from the meter to a lower opening, where they exit or are deposited into the ground or trench. These can be systems that physically capture the seed and move it from the meter to the outlet end of the seed delivery system or they can be pneumatic systems that pump air through the seed tube to assist movement of the seed. The air velocity can be controlled to control the speed at which the seed moves through the delivery system. Some examples of assistive systems are described in greater detail below with respect to other FIGS.

A downforce actuator 126 is mounted on a coupling assembly 128 that couples row unit 106 to toolbar 102. Actuator 126 can be a hydraulic actuator, a pneumatic actuator, a spring-based mechanical actuator or a wide variety of other actuators. In the example shown in FIG. 6, a rod 130 is coupled to a parallel linkage 132 and is used to exert an additional downforce (in the direction indicated by arrow 134) on row unit 106. The total downforce (which includes the force indicated by arrow 134 exerted by actuator 126, plus the force due to gravity acting on row unit 106 (and indicated by arrow 136) is offset by upwardly directed forces acting on closing wheels 118 (from ground 138) and disc opener 114 (again from ground 138). The remaining force (the sum of the force vectors indicated by arrows 134 and 136, minus the upward force on closing wheels 118 and opener 114 and the force on any other ground engaging component on the row unit (not shown), is the differential force. The differential force may also be referred to herein as the downforce margin. The downforce margin acts on the gauge wheels 116. This load can be sensed by a gauge wheel load sensor, which may be located anywhere on row unit 106 where it can sense that load. The gauge wheel load sensor can also be placed where it may not sense the load directly, but a characteristic indicative of that load. For example, it can be disposed near a set of gauge wheel control arms (or gauge wheel arm) 148 that movably mount gauge wheels 116 to shank 152 and control an offset between gauge wheels 116 and the discs in double disc opener 114, to control planting depth.

Arms (or gauge wheel arms) 148 illustratively abut against a mechanical stop (or arm contact member-or wedge) 150. The position of mechanical stop 150 relative to shank 152 can be set by a planting depth actuator assembly. Control arms 148 illustratively pivot around pivot point 156 so that, as planting depth actuator assembly actuates to change the position of mechanical stop 150, the relative position of gauge wheels 116, relative to the double disc opener 114, changes, to change the depth at which seeds are planted.

In operation, row unit 106 travels generally in the direction indicated by arrow 160. The double disc opener 114 opens a furrow 162 in the soil 138, and the depth of the furrow 162 is set by planting depth actuator assembly, which, itself, controls the offset between the lowest parts of gauge wheels 116 and disc opener 114. Seeds are dropped through seed tube 120, into the furrow 162 and closing wheels 118 close the furrow 162, e.g., push soil back into the furrow 162.

As the seeds are dropped through seed tube 120, the seeds can be sensed by seed sensor 122. Some examples of seed sensor 122 are described in greater detail below. Some examples of seed sensor 122 may include an optical or reflective sensor, which includes a radiation transmitter component and a receiver component. The transmitter component emits electromagnetic radiation and the receiver component then detects the radiation and generates a signal indicative of the presence or absence of a seed adjacent the sensors. In another example, row unit 106 may be provided with a seed firmer that is positioned to travel through the furrow 162, after seeds are placed in furrow 162, to firm the seeds in place. A seed sensor can be placed on the seed firmer and generate a sensor signal indicative of a seed. Again, some examples of seed sensors are described in greater detail below.

The present description proceeds with respect to the seed sensor being located to sense a seed passing it in seed tube 120, but this is for the sake of example only. Material application control system 113 illustratively receives a signal from seed sensor 122, indicating that a seed is passing sensor 122 in seed tube 120. Where an intermittent application pattern is used, system 113 then determines when to actuate applicators 109 so that material being applied through application assembly 117 (and out distal tip 119 of application assembly 117) will be applied at a desired location relative to the seed in trench or furrow 162. This is all described in greater detail elsewhere herein as well. One brief example will be described now, by way of overview. Material application control system 113 illustratively is programmed with, or detects a distance, e.g., a longitudinal distance, that the distal tip 119 is from the exit end 121 of seed tube 120. System 113 also illustratively senses, or is provided (e.g., by another component, such as a GPS unit or a tractor, etc.), the ground speed of row unit 106. As the row units 106 on an implement being towed by a prime mover (e.g., a tractor) may move faster or slower than the tractor during turns, particularly as the width of the implement increases, the material application control system 113 may sense, compute, or be provided the ground speed of each row unit 106 of the implement. By way of example, the material application control system 113 may sense or be provided information when the implement is turning right indicating that the rightmost row unit 106 is travelling slower, i.e., has a lower ground speed, than the leftmost row unit 106. Further, the material application control system 113 detects, is provided, or is programmed with, system data indicating the responsiveness of applicators 109 under certain conditions (such as under certain temperature conditions, certain humidity conditions, certain elevations, when spraying a certain type of fluid, etc.) and the spray angle of applicators 109, (such as the size and orientation of the spray pattern emitted by applicator 109), and system 113 also detects, is provided, or programmed with one or more properties of the material being applied through applicators 109 (as this may affect the speed at which applicators 109 respond, the time it takes for the material to travel through application assembly 117 to the distal tip 119 and be applied to furrow 162, etc.). Further, material application control system 113 illustratively detects (or is provided with a sensor signal indicative of) the forward speed of row unit 106 in the direction generally indicated by arrow 160. Application control system 113 can also obtain information indicative of the duty cycle used to control applicator 109.

With this type of information, once system 113 receives a seed sensor signal indicating that a seed is passing sensor 122 in seed tube 120, system 113 determines the amount of time it will take for the seed to drop through the outlet end of seed tube 121 and into furrow 162 to reside at its final seed location and position in furrow 162. System 113 then determines when tip 119 will be in a desired location relative to that final seed location and actuates applicators 109 using a pulse width modulated control signal with a switching frequency (given the signal duty cycle) that will apply the material at the desired location. By way of example, it may be that some material is to be applied directly on the seed. In that case, system 113 times the actuation of actuators 109 so that the applied material will be applied at the seed location. In another example, it may be desirable to apply some material at the seed location and also a predetermined distance on either side of the seed location along the furrow. In that case, system 113 generates the control signal used to control applicators 109 at a switching frequency and timing so that the material is applied in the desired fashion. In other examples, it may be that the material is to be applied at a location between seeds in furrow 162. By way of example, relatively high nitrogen fertilizer may be most desirably applied between seeds, instead of directly on the seed. In that case, system 113 has illustratively been programmed with the desired location of the applied material, relative to seed location, so that system 113 can determine when, and at what frequency, to generate the control signal to actuate applicators 109 in order to apply the material between seeds. Further, as discussed above, applicators 109 can be actuated to dispense material at a varying rate. Applicators 109 can dispense more material on the seed location and less at locations spaced from the seed location, or vice versa, or according to other application patterns. Different applicators 109 on the same row unit 106 can apply the same or different materials according to the same or different application patterns. It will be noted that a wide variety of different configurations are contemplated herein. For instance, in one example, applicators 109 may each have a valve that is provided with material through a separate supply line 111 and may have a separate distal spray tip or nozzle 119. Each applicator 109 may be placed closer to the distal tip or nozzle 119 (such as indicated by applicator locations 109A and 109C). In this way, there is less uncertainty as to how long it will take the material to travel from the applicators 109A and 109C to the corresponding distal spray tip or nozzle 119. In yet another example, the applicators are disposed at a different location (such as on seed tube 120) as indicated by applicators 109B and 109D. In those scenarios, again, applicator locations 109B and 109D are closer to the corresponding distal tip or nozzle 119B and the material may be applied before and/or after the seed drops into furrow 162. For instance, when seed sensor 120 detects a seed, system 113 may be able to actuate applicator 109B to apply material to furrow 162, before the seed exits the exit end 121 of seed tube 120 while continuously actuating a separate applicator 109D which is fed material by a separate supply line 111 from applicator 109B. However, by the time the seed drops through distal end 121 of seed tube 120, the final seed location may be directly on the material applied by applicator 109B. In yet another example, system 113 can control applicator 109B so that it applies material, but then stops applying it before the seed exits distal end 121, again while actuating applicator 109D with a switching frequency to continuously apply material. In that case, the material may be applied continuously in the furrow 162 by applicator 109D and at a location behind the seed in furrow 162, relative to the direction indicated by arrow 160, by applicator 109B. This actuation timing and switching frequency enables the one or more materials to be applied between seeds, on seeds, continuously, overlapping, and/or elsewhere. All of these and other configurations are contemplated herein.

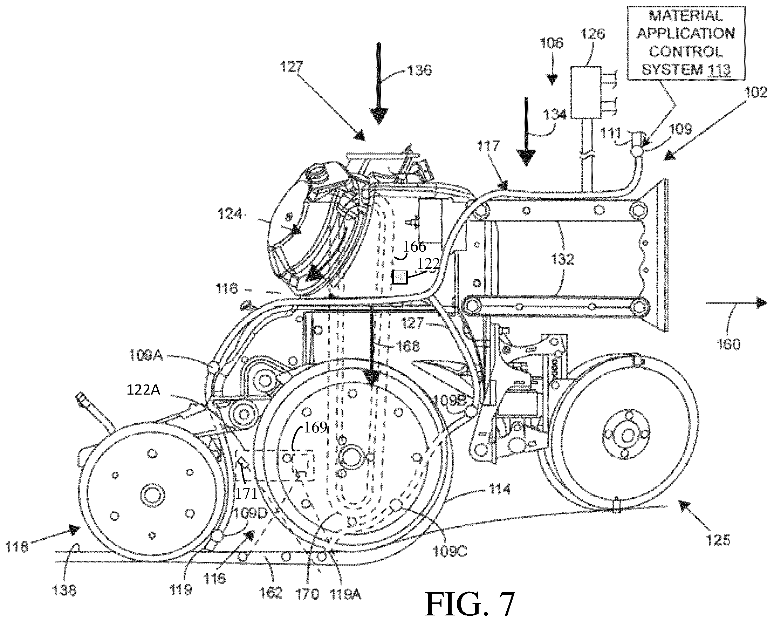

FIG. 7 is similar to FIG. 6, and similar items are similarly numbered. However, instead of the seed delivery system being a seed tube 120, which relies on gravity to move the seed to the furrow 162, the seed delivery system shown in FIG. 7 is an assistive seed delivery system 166. Also, FIG. 7 shows that row unit 106 has a row cleaner 125 which clears residue and other material ahead of opener 114. In FIG. 7, row unit 106 also has a seed hopper 127 that provides seed to seed meter 124. Assistive seed delivery system 166 also illustratively has a seed sensor 122 disposed therein.

Assistive seed delivery system 166 captures the seeds as they leave seed meter 124 and moves them in the direction indicated by arrow 168 toward furrow 162. System 166 has an outlet end 170 where the seeds exit assistive system 166, into furrow 162, where they again reach their final resting location.

FIG. 7 also shows that row unit 106 may have an optical seed sensor 122A (in addition to, or instead of, seed sensor 122) with an image capture device 169 and an illumination source 171. When the seeds are dropped into the furrow 162, the seeds can be sensed by seed sensor 122A. Illumination source 142 may direct illumination onto an area of furrow 162. Camera 169 captures an image (or a sequence of images) of the illuminated area. An image processing system (located on sensor 122A, material application control system 113, at a remote location, and/or elsewhere) processes the image(s) to identify planting characteristics, such as seed location, seed type, seed orientation, seed (or furrow) depth, seed spacing, seed-to-soil contact, furrow integrity, anomalous material (such as rocks, plant matter, etc.), and/or other planting characteristics. The optical seed sensor 122A can be placed in a variety of different locations on row unit 106, or on different components of row unit 106, to obtain an image (or a sequence of images) of seeds in the furrow 162.

In a system where seed sensor 122 is used, material application control system 113 considers the speed at which delivery system 166 moves the seed from seed sensor 122 to the exit end 170. The system 113 also illustratively considers the speed at which the seed moves from the exit end 170 into furrow 162. For instance, in one example the seed simply drops from exit end 170 into furrow 162 under the force of gravity. In another example, however, the seed can be ejected from delivery system 166 at a greater or lesser speed than that which would be reached under the force of gravity. Similarly, it may be that the seed drops straight downward into furrow 162 from the outlet end 170. **In** another example, however, it may be that the seed is propelled slightly rearwardly from the outlet end 170, to accommodate for the forward motion of the row unit 106, so that the travel path of the seed is more vertical and so the seed rolls less once it reaches the furrow. Further, the seed can be ejected rearwardly and trapped against the ground by a trailing member (such as a pinch wheel) which functions to stop any rearward movement of the seed, after ejection, and to force the seed into firm engagement with the ground. Again, FIG. 7 also shows that a plurality of applicators 109 can be placed at any of a wide variety of different locations, some of which are illustrated by numbers 109A, 109B, 109C, and 109D. **In** another example, as discussed in greater detail below with respect to FIG. 13, an applicator 109 can be mounted in place of or closely proximate device 169.

Where optical seed sensor 122A is used, material application control system 113 illustratively receives a signal from seed sensor 122A, indicating the planting characteristics discussed above, or other planting characteristics. Material application control system 113 can also receive a ground speed signal indicative of a speed of movement of row unit 106, and then determines when, and at what frequency, to independently actuate the different actuators in the applicators 109 on row unit 106 so that material being applied through application assemblies 117 (and out distal tips 119 of application assemblies 117) will be applied at a desired location relative to the seed in trench or furrow 162, or according to a desired application pattern, and/or based on other planting characteristics identified by processing the image(s) captured by optical seed sensor 122A. There can be a more than one seed sensor, seed sensors of different types, different locations for seed sensors, etc.

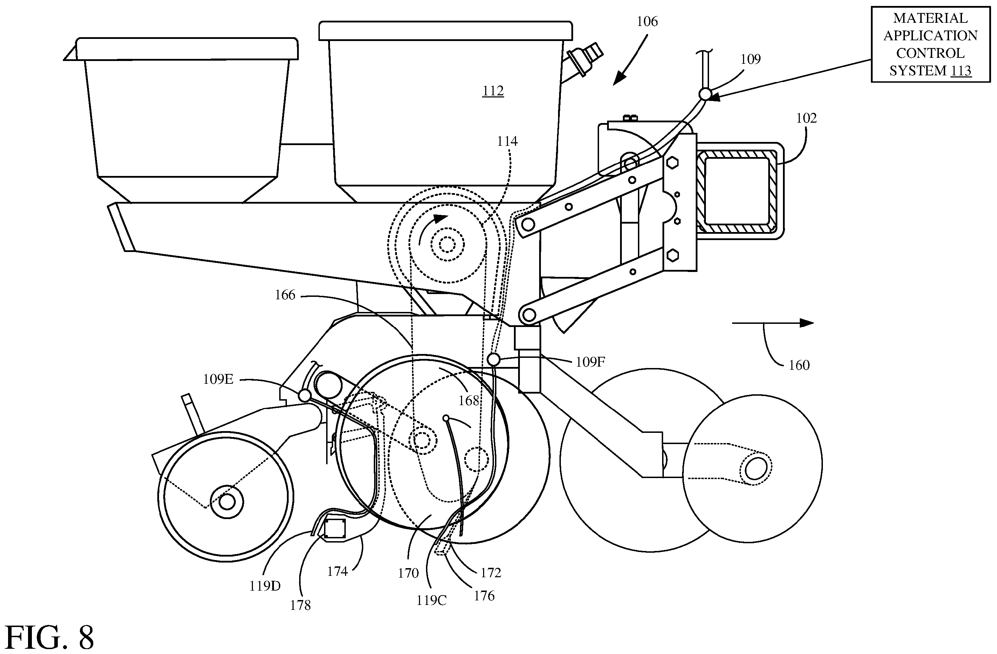

FIG. 8 is similar to FIG. 7 and similar items are similarly numbered. However, in FIG. 8, row unit 106 is also provided with members 172 and/or 174. Members 172 and/or 174 can be spring biased into engagement with the soil, or rigidly attached to the frame of row unit 106. In one example, member 172 can be a furrow shaper, which contacts the soil in the area within or closely proximate the furrow, and immediately after the furrow is opened, but before the seed is placed therein. Member 172 can thus contact the side(s) of the furrow, the bottom of the furrow, an area adjacent the furrow, or other areas. It can be fitted with a sensor 176, e.g., seed sensor 176, as well.

In another example, member 172 can be positioned so that member 172 moves through the furrow after the seed is placed in the furrow. In such an example, member 172 may act as a seed firmer, which firms the seed into its final seed location.

In either case, member 172 can include a seed sensor 122, which senses the presence of the seed. System 122 may be an optical sensor, which optically senses the seed presence as member 172 moves adjacent to, ahead of, or over the seed. Sensor 122 may be a mechanical sensor that senses the seed presence, or sensor 122 may be another type of sensor that senses the presence of the seed in the furrow. Sensor 122 illustratively provides a signal to material application control system 113 indicating the presence of the sensed seed.

In such an example, it may be that the plurality of applicators 109 on the row unit 106 are placed at the location of applicator 109E, shown in FIG. 8, and the outlet end or nozzle of the application assemblies corresponding to each applicator is shown at 119C. In the example shown in FIG. 8, outlet ends or nozzles 119C can be located closely behind member 172 relative to the direction indicated by arrow 160. Outlet ends or nozzles 119C can be disposed on the opposite side of member 172 as well (such as forward of member 172 in the direction indicated by arrow 160). In such an example, the seed sensor 122 senses the seed at a location that corresponds to its final seed location, or that is very closely proximate its final seed location. This may increase the accuracy with which seed sensor 122 senses the final seed location.

Also, in the example shown in FIG. 8, row unit 106 can have member 174 in addition to, or instead of, member 172. Member 174 can also be configured to engage the soil within, or closely proximate, the trench or furrow. Member 174 can have a seed sensor 122 that senses the presence of a seed (or a characteristic from which seed presence can be derived). Member 174 can be placed so that it closely follows the exit end 121 of the seed tube 120, or the exit end 170 of the assistive delivery system 166. Also, applicators 109 can be placed at the position illustrated at 109F.

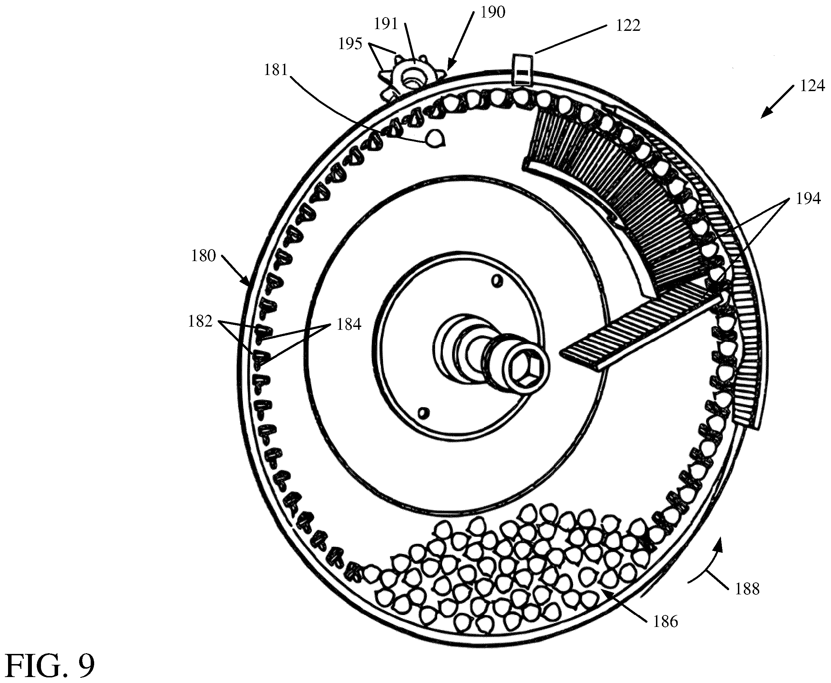

FIG. 9 shows one example of a rotatable mechanism that can be used as part of the seed metering system (or seed meter) 124. The rotatable mechanism includes a rotatable disc, or concave element, 180. Rotatable element 180 has a cover (not shown) and is rotatably mounted relative to the frame of the row unit 106. Rotatable element 180 is driven by a motor (not shown) and has a plurality of projections or tabs 182 that are closely proximate corresponding apertures 184. A seed pool 186 is disposed generally in a lower portion of an enclosure formed by rotating mechanism 180 and its corresponding cover. Rotatable element 180 is rotatably driven by its motor (such as an electric motor, a pneumatic motor, a hydraulic motor, etc.) for rotation generally in the direction indicated by arrow 188, about a hub. A pressure differential is introduced into the interior of the metering mechanism so that the pressure differential influences seeds from seed pool 186 to be drawn to apertures 184. For instance, a vacuum can be applied to draw the seeds from seed pool 186 so that they come to rest in apertures 184, where the vacuum holds the seeds in place. Alternatively, a positive pressure can be introduced into the interior of the metering mechanism to create a pressure differential across apertures 184 to perform the same function.

Once a seed comes to rest in (or proximate) an aperture 184, the vacuum or positive pressure differential acts to hold the seed within the aperture 184 such that the seed is carried upwardly generally in the direction indicated by arrow 188, from seed pool 186, to a seed discharge area 190. It may happen that multiple seeds are residing in an individual seed cell. In that case, a set of brushes or other members 194 that are located closely adjacent the rotating seed cells tend to remove the multiple seeds so that only a single seed is carried by each individual cell. Additionally, a seed sensor 122 can also illustratively be mounted adjacent to rotating element 180. Seed sensor 122 generates a signal indicative of seed presence and the signal may be used by system 113.

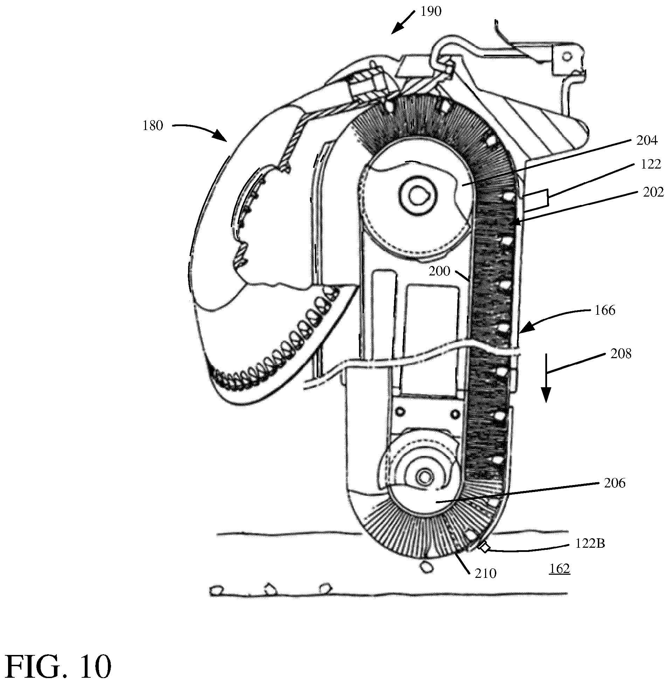

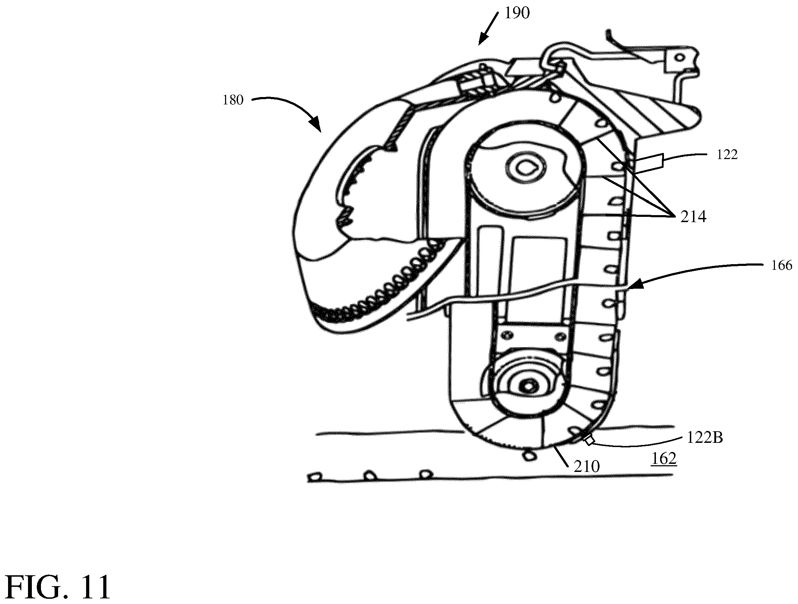

Once the seeds reach the seed discharge area 190, the vacuum or other pressure differential is illustratively removed, and a positive seed removal wheel or knock-out wheel 191, can act to remove the seed from the seed cell. Wheel 191 illustratively has a set of projections 195 that protrude at least partially into apertures 184 to actively dislodge the seed from those apertures. When the seed is dislodged (such as seed 181), the seed is illustratively moved by the seed tube 120, seed delivery system 166 (some examples of which are shown above in FIGS. 6-8 and below in FIGS. 10 and 11) to the furrow 162 in the ground.

FIG. 10 shows an example of a seed metering system and a seed delivery system, in which the rotating element 180 is positioned so that its seed discharge area 190 is above, and closely proximate, seed delivery system 166. In the example shown in FIG. 10, seed delivery system 166 includes a transport mechanism such as a belt 200 with a brush that is formed of distally extending bristles 202 attached to belt 200 that act as a receiver for the seeds. Belt 200 is mounted about pulleys 204 and 206. One of pulleys 204 and 206 is illustratively a drive pulley while the other is illustratively an idler pulley. The drive pulley is illustratively rotatably driven by a conveyance motor, which can be an electric motor, a pneumatic motor, a hydraulic motor, etc. Belt 200 is driven generally in the direction indicated by arrow 208.

Therefore, when seeds are moved by rotating element 180 to the seed discharge area 190, where they are discharged from the seed cells in rotating element 180, they are illustratively positioned within the bristles 202 by the projections 182 that push the seed into the bristles 202. Seed delivery system 166 illustratively includes walls that form an enclosure around the bristles 202, so that, as the bristles 202 move in the direction indicated by arrow 208, the seeds are carried along with them from the seed discharge area 190 of the metering mechanism, to a discharge area 210 either at ground level, or below ground level within a trench or furrow 162 that is generated by the furrow opener 114 on the row unit 106.

Additionally, the seed sensor 122 is also illustratively coupled to seed delivery system 166. As the seeds are moved within bristles 202, sensor 122 can detect the presence or absence of a seed. It should also be noted that while the present description will proceed as having sensors 122 and/or 122A, it is expressly contemplated that, in another example, only one sensor is used. Or additional sensors can also be used. Similarly, the seed sensor 122, 122A shown in the FIGS. can be disposed at a different location, such as that shown at 122B. Having a seed sensor 122 closer to where the seed is ejected from the system can reduce error in identifying the final seed location. Again, there can be multiple seed sensors 122, 122A, different kinds of seed sensors, and they can be located at many different locations.

FIG. 11 is similar to FIG. 10, except that seed delivery system 166 does not include a belt with distally extending bristles. Instead, system 166 includes a flighted belt (transport mechanism) in which an endless or continuous member (e.g., a belt) has a set of paddles 214 that form individual chambers (or receivers), into which the seeds are dropped, from the seed discharge area 190 of the metering mechanism. The flighted belt moves the seeds from the seed discharge area 190 to the exit end 210 of the flighted belt, within the trench or furrow 162.

There are a wide variety of other types of delivery systems as well, that include a transport mechanism and a receiver that receives a seed. For instance, a delivery system can include a dual belt delivery system in which opposing belts receive, hold, and move seeds to the furrow, a rotatable wheel that has sprockets which catch seeds from the metering system and move them to the furrow, multiple transport wheels that operate to transport the seed to the furrow, and an auger, among others.

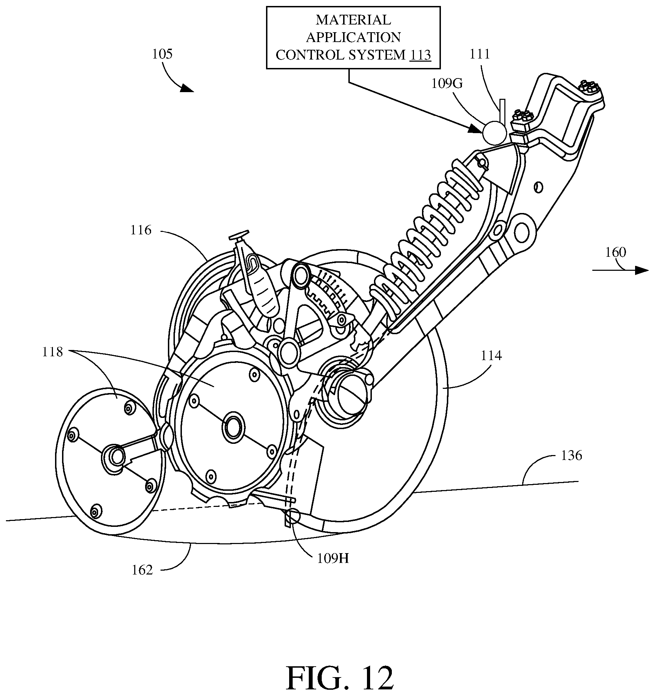

FIG. 12 is a side perspective view of an applicator unit 105. Some items are similar to those shown in other FIGS. and these items are similarly numbered. Briefly, in operation, applicator unit 105 attaches to a side-dress bar that is towed behind a towing vehicle 94, so unit 105 travels between rows (if the rows are already planted). However, instead of planting seeds, applicator unit 105 simply applies material at a location between rows of seeds (or, if the seeds are not yet planted, between locations where the rows will be, after planting). When traveling in the direction indicated by arrow 160, disc opener 114 (in this example, it is a single disc opener) opens furrow 162 in the ground 136, at a depth set by gauge wheel 116. Applicator unit 105 can have a plurality of independently controllable applicators 109. When applicators 109 are actuated, material is applied in the furrow 162 and closing wheels 118 then close the furrow 162.

As unit 105 moves, material application control system 113 controls applicators 109 to dispense material. This can be done relative to seed or plant locations, if those locations are sensed or are already known or have been estimated. Application can also be done before the seed or plant locations are known. In this latter scenario, the locations where the material is applied can be stored so that seeds can be planted later, relative to the locations of the material that has been already dispensed.

FIG. 12 shows that applicators 109 can be mounted to any of a plurality of different positions on unit 105. Two of the positions are shown at 109G and 109H. These are examples and the applicators 109 can be located elsewhere as well. Similarly, multiple applicators 109 can be disposed on unit 105 at different locations, or adjacent one another, to dispense multiple different materials or to dispense material in a more rapid or more voluminous way or to dispense the same material at different rates or according to different application patterns.

FIG. 13 shows an enlarged view of a portion of row unit 106 illustrated in FIG. 7, and similar items are similarly numbered. In FIG. 13, applicator 109 is shown having a spray tip or nozzle 252 and a valve actuator 254 that actuates a valve within housing 256. The valve is fed liquid material through a conduit in application assembly 117. When actuator 254 is actuated to open the valve, liquid material passes through the conduit in application assembly 117, through the valve, and out through nozzle 252. In the example shown in FIG. 13, nozzle 252 generates a spray pattern indicated by number 258. The spray pattern spreads over an angle α in the front-to-back direction relative to row unit 106.

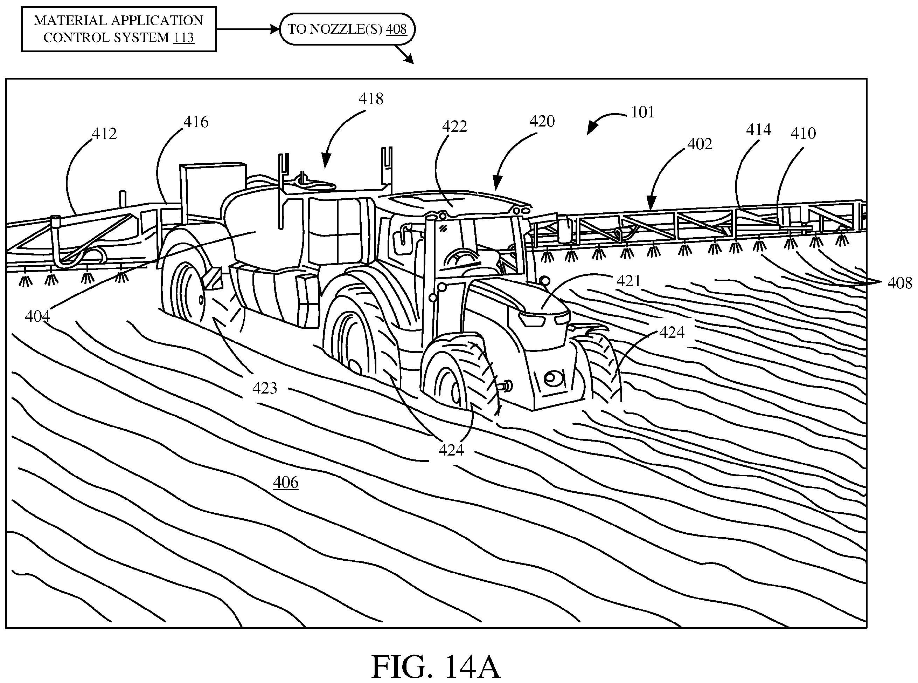

FIG. 14A illustrates another example of an agricultural spraying machine (or agricultural sprayer) 101. Sprayer 101 includes a spraying system 402 having a tank 404 containing a product, such as a liquid product, that is to be applied to field 406. Tank 404 is fluidically coupled to spray nozzles 408 by a delivery system comprising a set of conduits. A fluid pump is configured to pump the product from tank 404 through the conduits and through nozzles 408 to apply the product to the field 406. In some examples, the fluid pump is actuated by operation of a motor, such as an electric motor or hydraulic motor, that drives the pump. Material application control system 113 can generate control signals to control the nozzles 408 individually, collectively, or in groups.

Applicators on sprayer 101 can be spray nozzles 408 that are coupled to, and spaced apart along, boom 410. Boom 410 includes arms 412 and 414 which are coupled to a center frame 416. In some examples, arms 412 and 414 can articulate and pivot relative to center frame 416. In some examples, center frame 416 can be actuated up and down to adjust its height above field 406. In some examples, arms 412 and 414 can articulate and pivot relative to center frame 416 and center frame 416 can be actuated up and down. Thus, in some examples, arms 412 and 414 are movable between a storage or transport position and an extended or deployed position (shown in FIG. 14A). The boom 410, including each arm 412 and 414, can include multiple discrete and controllable sections which are supplied product from tank 404 by the fluid pump through a respective conduit of each section.

Each section can include a respective set of one or more spray nozzles 408. Each section can be activated or deactivated by material application control system 113 through the actuation of a corresponding controllable valve, for instance, a section can be deactivated, that is the section or the nozzles of the section, or both, are prevented from receiving fluid, by actuation of a controllable valve that is upstream of the section or the nozzles, or both. In some examples, the nozzles 408 of the section may each have an associated controllable valve which can be actuated by system 113 to activate or deactivate the nozzles 408. The application rate of product is the rate (volumetric rate) at which product is applied to the field over which sprayer 101 travels. The application rate corresponds to a volumetric flow rate of the product from the tank 404 through the spray nozzles 408. The volumetric flow rate can be controlled by system 113 controlling operation of the pump, such as by varying the speed of actuation of the pump with an associated motor. In some examples, where the application rate is controlled for individual sections or for individual nozzles 408, a controllable valve, such as solenoid valve, a piezo valve, or the like, that corresponds to each section or to each nozzle 408, can be operable to reciprocate (e.g., pulse) between a closed state and an open state at variable frequency (e.g., pulse width modulation control) to control the rate at which the product is discharged from the set of spray nozzles 408 of the respective section or from the respective individual spray nozzle 408. For instance, based on the ground speed corresponding to a nozzle 408 or a group of nozzles 408, material application control system 113 can control the switching frequency of the pulse width modulated control signal to obtain a target application pattern on field 406.

In the example illustrated in FIG. 14A, agricultural sprayer 101 comprises a towed implement 418 that carries the spraying assembly, and a towing or support machine 420 (illustratively a tractor) that tows the towed spraying implement 418. Towed implement 418 includes a set of ground engaging elements, such as wheels 423. Towing machine 420 includes a power plant 421, such as internal combustion engine that drives rotation of a set of ground engaging elements, such as wheels 424, to propel the sprayer 101 over field 406 at variable speeds. The ground engaging elements can also be tracks, or other traction elements as well. In the example illustrated, towing machine 420 includes an operator compartment or cab 422, which can include a variety of different operator interface mechanisms for controlling agricultural sprayer 101.

Agricultural sprayer 101 can include a variety of sensors, such as one or more ground speed sensors that may be located on towed implement 418 and/or on towing machine 420. The ground speed sensor(s) sense ground speed and generate a sensor signal, indicative of the sensed ground speed, to material application control system 113.

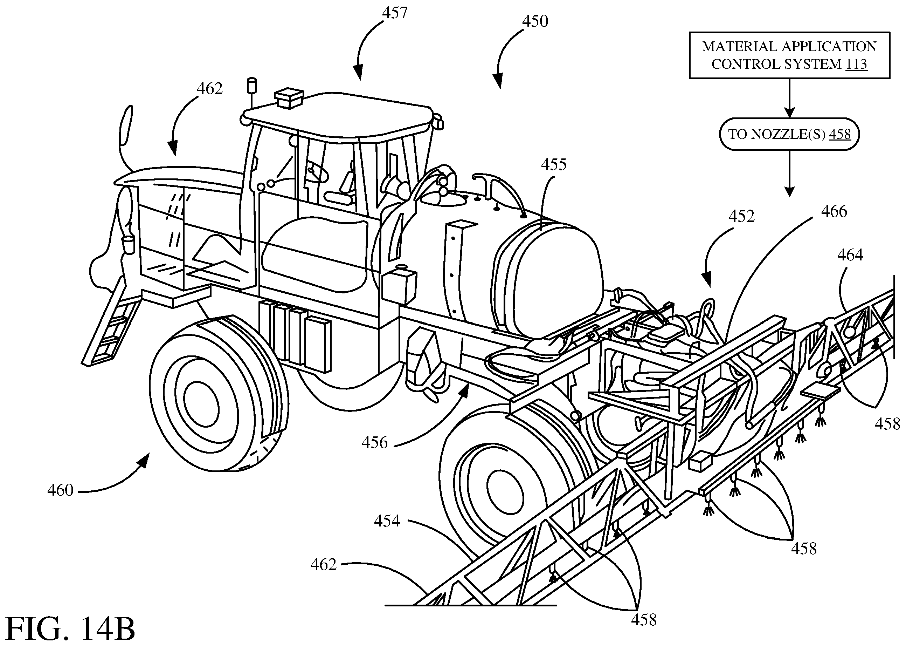

FIG. 14B illustrates one example of an agricultural sprayer 450 that is self-propelled. Sprayer 450 has an on-board spraying system 452, including, among other things, a tank 455 containing a product and a boom 454, that is carried on a machine frame 456 having an operator compartment 457, a set of ground engaging elements 460, such as wheels or tracks, and a power plant 462, such as an internal combustion engine, that drives rotation of ground engaging elements 460 to propel sprayer 450 over the worksite (field) at which it operates. Operator compartment 457 can include a variety of different operator interface mechanisms for controlling agricultural sprayer 450. Tank 455 is fluidically coupled to spray nozzles 458 by a delivery system comprising a set of conduits. A fluid pump is configured to pump the product from tank 455 through the conduits and through nozzles 458 to apply the product to the field over which agricultural sprayer 450 travels. In some examples, the fluid pump is actuated by operation of a motor, such as an electric motor or hydraulic motor, that drives the pump and that is controlled by material application control system 113.

Spray nozzles 458 are coupled to, and spaced apart along, boom 454. Boom 454 includes arms 462 and 464 which are coupled to a center frame 466. In some examples, arms 462 can articulate or pivot relative to center frame 466, such as by actuation of one or more actuators. Thus, arms 462 and 464 are movable between a storage or transport position and an extended or deployed position (shown in FIG. 14B). In some examples, center frame 466 can be actuated up and down (by one or more actuators) to change a height of center frame 466 above the worksite. The boom 454, including each arm 462 and 464, can include multiple discrete and controllable sections which are supplied product from tank 455 by the fluid pump through a respective conduit of each section.

Each section can include a respective set of one or more spray nozzles 458. Each section can be activated or deactivated by control signals generated from material application control system 113 that actuate a corresponding controllable valve, for instance, a section can be deactivated, that is the section or the nozzles 458 of the section, or both, are prevented from receiving fluid, by actuation of a controllable valve that is upstream of the section or the nozzles, or both. In some examples, the nozzles 458 of the section may each have an associated controllable valve which can be actuated by material application control system 113 to activate or deactivate the nozzles 458. The application rate of product is the rate (volumetric rate) at which product is applied to the field over which sprayer 450 travels. The application rate corresponds to a volumetric flow rate of the product from the tank 455 through the spray nozzles 458. The volumetric flow rate is controlled by operation of the pump, such as by varying the speed of actuation of the pump with an associated motor. In some examples, where material application control system 113 controls the application rate for individual sections or for individual nozzles 458, a controllable valve, such as solenoid valve, a piezo valve, or the like, that corresponds to each section or to each nozzle 458, can be controlled by system 113 to reciprocate (e.g., pulse) between a closed state and an open state at variable frequency (e.g., pulse width modulation control) to control the rate at which the product is discharged from the set of spray nozzles 458 of the respective section or from the respective individual spray nozzle 458.

Agricultural sprayer 150 can include a variety of sensors, such as a ground speed sensor that senses the ground speed of sprayer 150 and /or of individual nozzles 458 or one or more sets of nozzles 458. Material application control system 113 receives the signals generated by the ground speed sensor(s) and varies the switching frequency of the pulse width modulated control signal(s) used to control actuation of the valves in nozzles 458, based on the ground speed, to maintain a target application pattern.

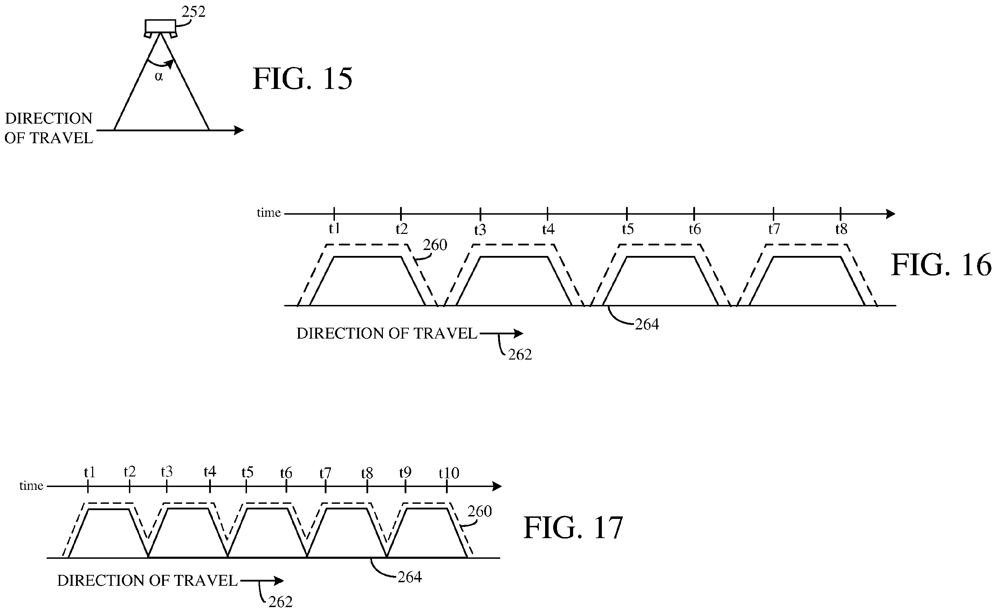

FIGS. 15-19 show examples of spray patterns that can be generated by an applicator 109 that is controlled using a different frequency of actuation (or a different switching frequency). For purposes of FIGS. 15-19, it is assumed that the spray pattern for the applicator 109 is represented by the pattern shown in FIG. 15 in which the spray pattern extends over an angle α as it exits the nozzle 252. It is also assumed that nozzle 252 is oriented to spray the liquid material in the spray pattern shown in FIG. 15 along the furrow or row in the field (e.g. in the direction of travel). Different nozzles 252 may have different spray patterns so those nozzles can be controlled differently to obtain the desired application pattern.

In FIGS. 16-19, it is assumed that the material application control system 113 detects the ground speed of the agricultural machine and sets the switching frequency in order to obtain a desired application pattern. The application control system 113 can also detect or obtain the duty cycle as well as an indication of the application pattern that is to be used.

FIG. 16 shows an intermittent spray pattern in which the actuator 254 is actuated to open the valve at times t1, t3, t5 and t7 and the duty cycle is set to 50% so that the valve is deactuated, or closed, at times t2, t4, t6, and t8. The on-ground application rate of material being applied by applicator 109 according to the pattern illustrated in FIG. 16 is represented by the dashed line 260. In FIG. 16, it is assumed that the row unit 106 is traveling in the direction of travel indicated by arrow 262. Therefore, at time t1, the amount of material applied to the ground extends rearwardly of the nozzle in the direction of travel due to the spray pattern illustrated in FIG. 15. Then, at time t2, when the actuator closes the valve, the material extends forward of the nozzle in the direction of travel, again due to the spray angle of the material that comes out of the nozzle, as shown in FIG. 15. However, by setting the switching frequency large enough, there is a gap 262 on the ground where there is no material applied on the ground. Thus, the spray pattern shown in FIG. 16 is an intermittent spray pattern where portions of the ground have material applied and those portions are separated by portions of the ground where no material is applied.

FIG. 17 shows another spray pattern, which is a continuous spray pattern, where the switching frequency is twice that shown in FIG. 16. In the pattern shown in FIG. 17, the actuator is actuated to open the valve at times t1, t3, t5, t7, and t9 and the duty cycle is again set to 50% so that the actuator is actuated to close the valve at times t2, t4, t6, t8, and t10. Again, the on-ground application rate is represented by line 260 in FIG. 17, which shows that, while the on-ground application rate varies from a higher level to a lower level, it is continuous in that there are no gaps. Such an application pattern may be used where the application rate of material is desirably higher on the seeds or between the seeds and is desirable lower at other locations in the furrow.

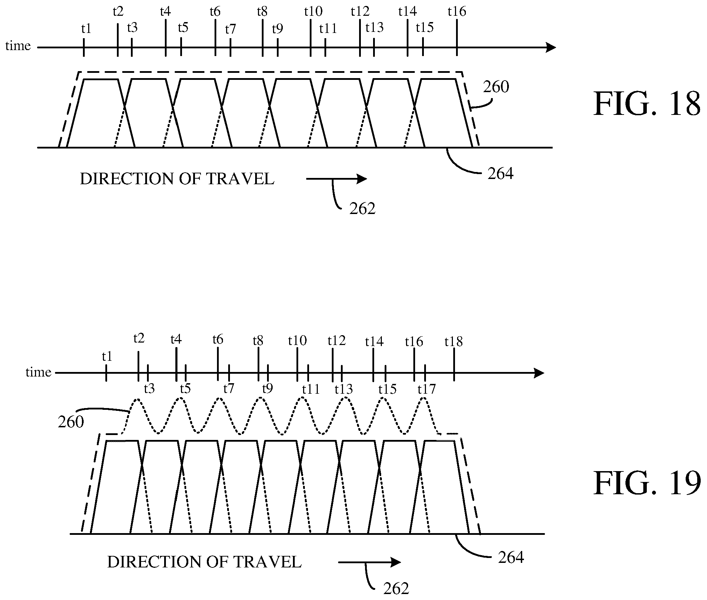

FIG. 18 illustrates an overlapping application pattern in which the switching frequency is again increased over that illustrated in FIG. 17. Thus, the actuator is actuated to open the valve at times t1, t3, t5, t7, t9, t11, t13, and t15, and the duty cycle can be set to 50%, or to a different value so that the actuator is actuated to close the valve at times t2, t4, t6, t8, t10, t12, t14, and t16. Because the switching frequency is set to obtain such an overlapping application pattern, this results in an application rate 260 that is relatively constant. Thus, for continuous application of material at a constant application rate, the overlapping pattern illustrated in FIG. 18 can be generated.

FIG. 19 shows another application pattern in which the switching frequency is again increased over that shown in FIG. 18, and in which the duty cycle can be maintained at 50% or changed. It can be seen in FIG. 19 that the application pattern is overlapping to the point that it is nearly fully overlapped. The actuator is controlled to open the valve at times t1, t3, t5, t7, t9, t11, t13, t15, and t17 and to close the valve at times t2, t4, t6, t8, t10, t12, t14, t16, and t18. This results in an on-ground application rate that intermittently increases at different points along the ground in the direction of travel. Therefore, in scenarios where the material is to be continuously applied, but applied at an increasing rate at different locations in the field, the application pattern illustrated in FIG. 19 can be used.

It will be appreciated that FIGS. 16-19 show examples of application patterns that can be obtained by sensing the ground speed of the agricultural machine or row unit on which the applicator is mounted, and varying the switching frequency of the control signal to obtain the desired application pattern. While examples are illustrated in FIGS. 16-19, any of a wide variety of other application patterns can be used as well.

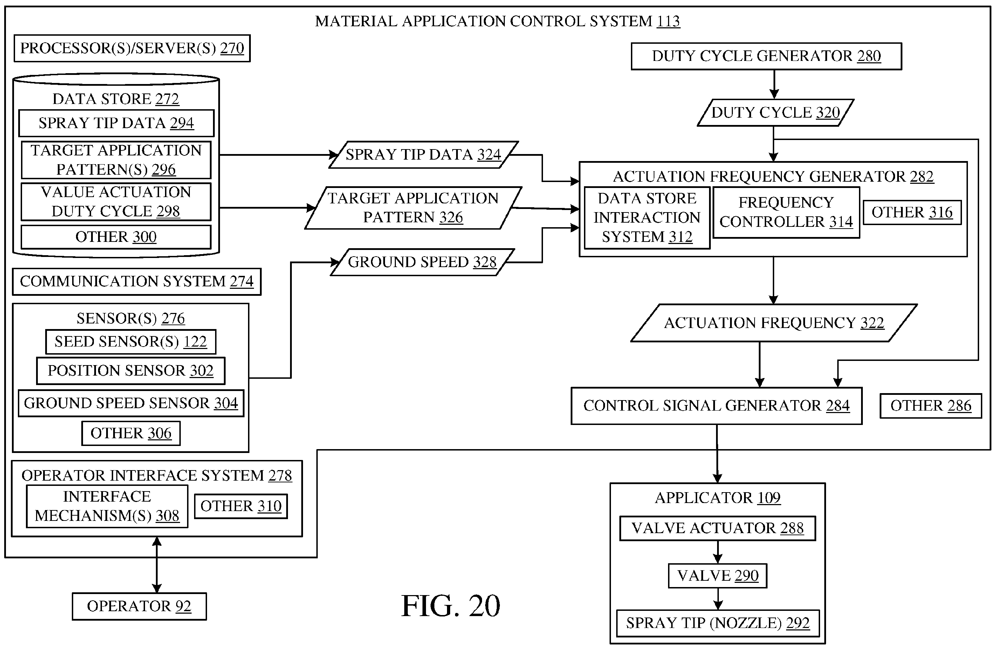

FIG. 20 is a block diagram showing one example of material application control system 113 in more detail. It will be appreciated that different parts of material application control system 113 can be located in different locations, such as on a row unit, on a towing vehicle, in a remote server environment, or elsewhere. The material application control system 113 is shown in a single location in FIG. 20 for the sake of example only.

In the example shown in FIG. 20, material application control system 113 includes one or more processors or servers 270, data store 272, communication system 274, sensors 276, operator interface system 278, duty cycle generator 280, actuation frequency generator 282, control signal generator 284, and other items 286. In the example shown in FIG. 20, applicator 109 includes valve actuator 288, valve 290, and spray tip or nozzle 292. Valve actuator 288 actuates valve 290 to open and close valve 290. Valve 290, when opened, provides material under pressure to spray tip or nozzle 292. FIG. 20 also shows that an operator 92 can interact with material application control system 113.

Data store 272 can include spray tip data 294, target application pattern(s) 296, valve actuation duty cycle 298, and other items 300. Sensors 276 can include seed sensor 122, position sensor 302, ground speed sensor 304, and/or other items 306. Operator interface system 278 can include interface mechanisms 308, and other items 310. Actuation frequency generator 282 can include data store interaction system 312, frequency controller 314, and other items 316. Before describing the overall operation of material application control system 113 in more detail, a description of some of the items in material application control system 113, and their operation, will first be provided.

Spray tip data 294 may identify the type of spray tip or nozzle 292 that is being used by applicator 109. The spray tip data 294 may identify the type and extent of the spray angle generated by the spray tip or nozzle 292, and other information about the spray tip or nozzle 292. Target application patterns 296 may be default patterns, patterns entered by operator 92, or patterns obtained in other ways. The target application pattern 296 that is to be used by material application control system 113 may be selected based upon the type of material that is being applied, the crop type, operator selection inputs, the type of spray tip or nozzle being used, and/or the environmental conditions such as temperature or other information. Valve actuation duty cycle 298 may be a stored value indicating the duty cycle of the pulse width modulated signal generated by control signal generator 284 to control valve actuator 288. The valve actuation duty cycle 298 may be fixed or variable. The duty cycle may be varied based upon the characteristics of the liquid being applied, the temperature conditions, the type of material being applied, the response time of valve actuator 288 and valve 290, among other things.

Communication system 274 facilitates communication among the items on material application control system 113 with one another and may also facilitate communication over a network with other systems and other machines. Therefore, communication system 274 may be a controller area network (CAN) bus and bus controller, a cellular communication system, a near field communication system, a wide area network communication system, a local area network communication system, a Wi-Fi or Bluetooth communication system, among others.

Sensors 276 may be located on row units 106, on implement 100, on towing vehicle 94, or elsewhere. Sensors 276 illustratively sense one or more different variables and generate an output indicative of the sensed variable. Sensors 276 can include seed sensor 122, discussed elsewhere herein. Sensors 276 can also include position sensor 302 which senses the position of sensor 302 in a global or local coordinate system and generates an output indicative of that location. Therefore, position sensor 302 may be a global navigation satellite system (GNSS) receiver, a cellular triangulation system, a dead reckoning system, or any of a wide variety of other position sensors.

Ground speed sensor 304 senses and generates an output indicative of the ground speed of the machine on which ground speed sensor 304 is mounted. Ground speed sensor 304 may be a speedometer, a rotational sensor that senses the rotational speed of an axel, a transmission or drive shaft, or the output of a motor. Ground speed sensor 304 may generate an output based upon the inputs from other sensors. For instance, ground speed sensor 304 may receive a plurality of separate outputs from position sensor 302 and generate an output indicative of the ground speed of the machine based upon its change in position over time. Ground speed sensor 304 can be any of a wide variety of other types of sensors as well.

Operator interface mechanisms 308 can include a wide variety of different types of mechanisms that receive inputs from an operator 92 and generate outputs for operator 92. For instance, operator interface mechanisms 308 can include joysticks, a steering wheel, pedals, levers, knobs, buttons, etc. Interface mechanisms 308 can also include a display screen, user actuatable mechanisms on a display screen (such as links, icons, buttons, etc.) or any of a wide variety of other mechanisms that can be used to generate audio, visual, and/or haptic outputs to operator 92 and/or receive inputs from operator 92. Duty cycle generator 280 may receive inputs and generate an output 320 indicative of the duty cycle that is to be applied to the control signal used to control valve actuator 288. Duty cycle generator 280 may access a valve actuation duty cycle 298 from data store 272, receive an input from operator 92 identifying the duty cycle 320, compute the duty cycle 320 based upon a wide variety of different types of information, such as the desired application rate, the pressure generated by the pumps used to pump fluid from reservoirs or tanks to the applicators 109, the flow rate of the liquid in units of volume per time, and/or any of a wide variety of other variables.

Actuation frequency generator 282 generates an output 322 indicative of the actuation frequency or switching frequency of the control signal generated by control signal generator 284 to control valve actuator 288. In one example, actuation frequency generator 282 receives a spray tip data input 324 identifying spray tip data 294, as well as target application pattern data 326 indicative of the target application pattern 296 that is to be used to control applicator 109. Actuation frequency generator 282 also receives a ground speed input 328 indicative of the sensed ground speed output by ground speed sensor 304. Data store interaction system 212 can access data store 272 to obtain the various inputs 324 and 326. The inputs can also be received by operator 92 through operator interface system 278 or in other ways.

Based upon the inputs received, frequency controller 314 generates the output 322 indicative of the actuation frequency used to control valve actuator 288. Frequency controller 314 can receive the various inputs and access a look up table in data store 272 to identify the actuation frequency 322. Frequency controller 314 may also compute or calculate the actuation frequency 322 based upon the ground speed 328 and/or any other inputs (such as the spray tip data 324, the target application pattern 326, etc.). As the ground speed 328 varies, frequency controller 314 can vary the actuation frequency 322 to maintain the desired target application pattern 326 given the spray tip data 324 and other information.

Based upon the duty cycle 320 and actuation frequency 322, control signal generator 284 generates a control signal to control valve actuator 288 using a control signal with the desired actuation frequency (or switching frequency) 322 and the desired duty cycle 320.

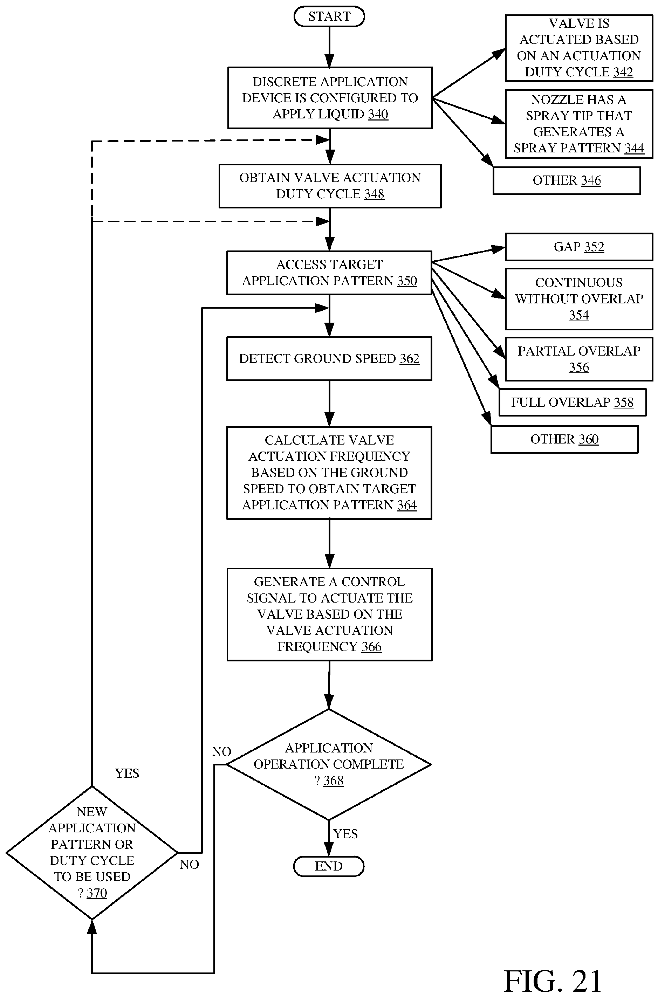

FIG. 21 is a flow diagram illustrating one example of the operation of material application control system 113 in more detail. It is first assumed that a discrete application device (such as an applicator 109) is configured to apply liquid to a field, as indicated by block 340 in the flow diagram of FIG. 21. It is assumed that the discrete application device includes a valve 290 that is actuated based upon an actuation duty cycle 320, as indicated by block 342 in the flow diagram of FIG. 21. The applicator 109 may also have a spray tip or nozzle 292 that generates a particular spray pattern, as indicated by block 344. The discrete application device can be configured in other ways as well, as indicated by block 346.

Actuation frequency generator 282 obtains a valve actuation duty cycle 320 from duty cycle generator 280. Obtaining the valve actuation duty cycle is indicated by block 348 in the flow diagram of FIG. 21. Actuation frequency generator 282 also accesses the target application pattern 326, as indicated by block 350 in the flow diagram of FIG. 21. In one example, data store interaction system 312 obtains the target application pattern 296 from data store 272. The target application pattern can be obtained through user input, as a default pattern, or in other ways as well. The target application patterns can be a discontinuous pattern with a gap between on-ground applications, as indicated by block 352, or a continuous application pattern, without overlap, as indicated by block 354. The application pattern can include a partial overlap pattern 356, or a full overlap pattern 358, or any of a wide variety of other application patterns, as indicated by block 360.

Ground speed sensor 304 detects the ground speed of the row unit 106 or other machine on which applicator 109 is mounted. Detecting ground speed is indicated by block 362 in the flow diagram of FIG. 21. The ground speed 328 is provided to frequency controller 314 which calculates the valve actuation frequency (or switching frequency) 322 that is needed to obtain the target application pattern 326. Calculating the valve actuation frequency is indicated by block 364 in the flow diagram of FIG. 21.

The valve actuation frequency 322 and duty cycle 320 are provided to control signal generator 284. Control signal generator 284 generates a pulse width modulated control signal to actuate the valve actuator 288 (in order to open and close valve 290) based upon the valve actuation frequency 322, as indicated by block 366. Until the operation is complete, as determined at block 368, processing proceeds at block 370 where frequency controller 314 determines whether a new application pattern 326 is to be used, or whether the duty cycle 320 has changed. For instance, the agricultural machine on which applicator 109 is mounted may move to a different portion of a field where a different application pattern is to be used. Frequency controller 314 can determine this based upon the location of the agricultural machine, based upon an operator input, or in other ways. Similarly, the duty cycle 320 may change because the material being applied changes, because the environmental conditions change, or for any of a wide variety of other reasons. If either the application pattern or the duty cycle has been changed, as determined at block 370, then processing reverts to either block 348 where the new duty cycle 320 is obtained, or block 350 where the new target application pattern is obtained. Referring again to block 370, if no new application pattern or duty cycle is to be used, then processing reverts to block 362 where frequency controller 314 continues to monitor the ground speed 328 and generate the actuation frequency 322 based upon the detected ground speed.

It can thus be seen that the present description describes a system that detects ground speed of an applicator and modifies the switching frequency of a pulse width modulated control signal to generate a desired on-ground application pattern. The on-ground application pattern can thus be maintained even when the ground speed increases or decreases, and even though the duty cycle is held constant. Similarly, the valve switching frequency can be modified to accommodate or account for changes in the duty cycle. This allows an on-ground application pattern to be either intermittent or continuous using a single applicator. Further, the on-ground application pattern can be overlapping partially or fully to maintain a desired on-ground application rate of material being applied by the applicator.

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

Also, a number of user interface (UI) displays have been discussed. The UI can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, they can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

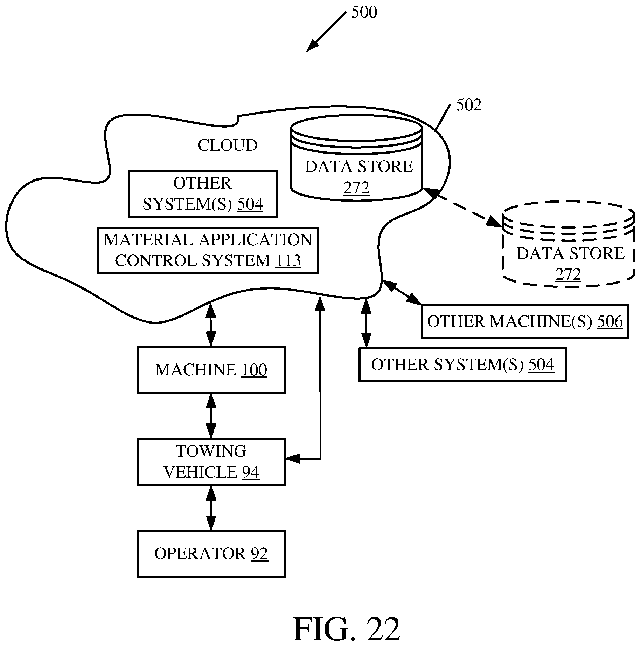

FIG. 22 is a block diagram of the architecture, shown in FIG. 1, except that planter 100 communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in FIG. 20 as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 22, some items are similar to those shown in FIGS. 14A, 14B, and 20 and they are similarly numbered. FIG. 22 specifically shows that material application control system 113 and data store 272 (or other items in agricultural system 90) can be located at a remote server location 502. Therefore, parts of system 113 can access those systems through remote server location 502. FIG. 22 also shows that other machines 506 and/or other systems 504 can communicate with remote server environment 502.

FIG. 22 also depicts another example of a remote server architecture. FIG. 22 shows that it is also contemplated that some elements of FIGS. 14A, 14B, and 20 can be disposed at remote server location 500 while others are not. By way of example, data store 272 can be disposed at a location separate from location 500, and accessed through the remote server at location 500. Regardless of where the elements are located, the elements can be accessed directly by system 113, through a network (either a wide area network or a local area network), the elements can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the planter or sprayer comes close to the fuel truck for fueling, the system automatically collects the information from the planter or sprayer using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the planter or sprayer until the planter or sprayer enters a covered location. The planter or sprayer, itself, can then send the information to the main network.

It will also be noted that the elements of FIGS. 14A, 14B and 20, or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

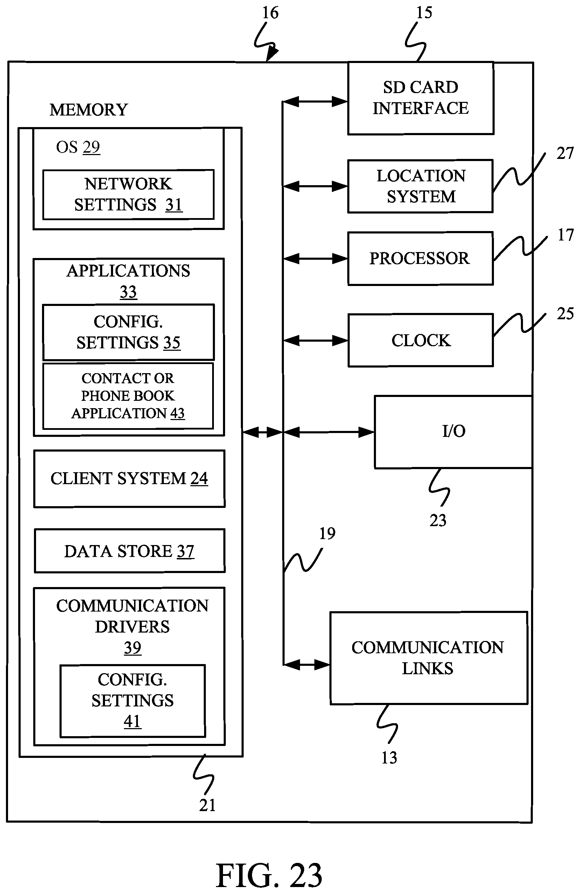

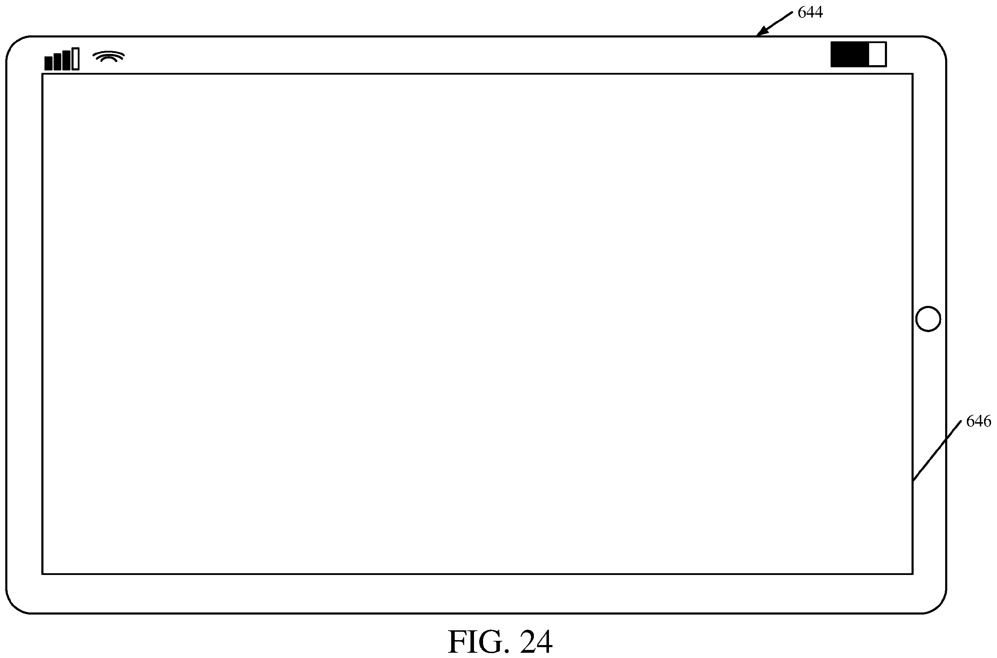

FIG. 23 is a simplified block diagram of one illustrative example of a handheld or mobile computing device that can be used as a user's or client's handheld device 16, in which the present system (or parts of it) can be deployed. For instance, a mobile device can be deployed in the operator compartment of towing vehicle 94 for use in generating, processing, or displaying the application data. FIGS. 24-25 are examples of handheld or mobile devices.

FIG. 23 provides a general block diagram of the components of a client device 16 that can run some components shown in FIGS. 14A, 14B, and 20, that interacts with those components, or both. In the device 16, a communications link 13 is provided that allows the handheld device to communicate with other computing devices and in some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a GNSS, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 24 shows one example in which device 16 is a tablet computer 644. In FIG. 24, computer 644 is shown with user interface display screen 646. Screen 646 can be a touch screen or a pen-enabled interface that receives inputs from a pen or stylus. Computer 644 can also use an on-screen virtual keyboard. Of course, computer 644 might also be attached to a keyboard or other user input device through a suitable attachment mechanism, such as a wireless link or USB port, for instance. Computer 644 can also illustratively receive voice inputs as well.

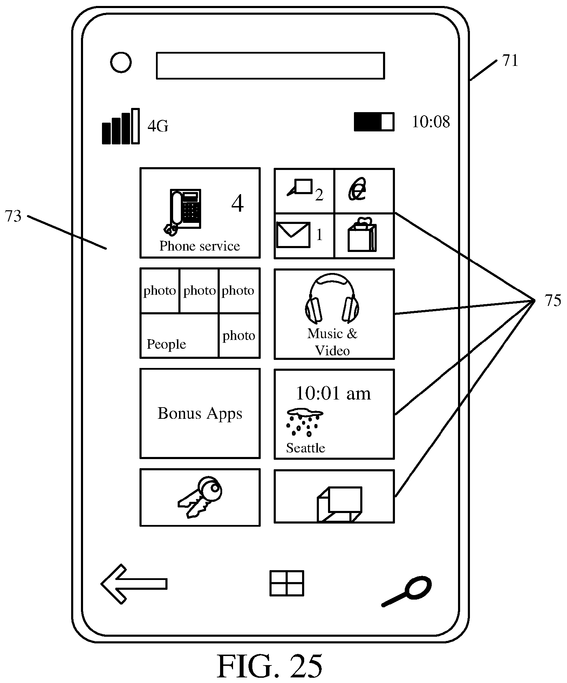

FIG. 25 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

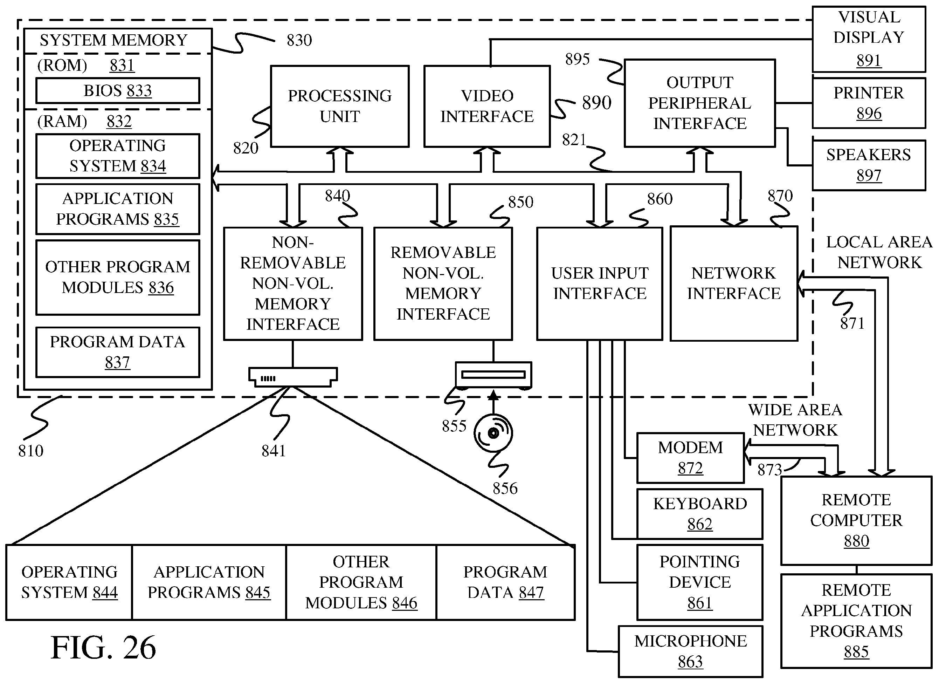

FIG. 26 is one example of a computing environment in which elements of FIGS. 1, 14A, 14B, and 20, or parts of it, (for example) can be deployed. With reference to FIG. 26, an example system for implementing some embodiments includes a computing device in the form of a computer 810 programmed to operate as described above. Components of computer 810 may include, but are not limited to, a processing unit 820 (which can comprise processors or servers from previous Figures), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to FIGS. 14A, 14B and 20 can be deployed in corresponding portions of FIG. 26.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium, which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 25 illustrates operating system 834, application programs 835, other program modules 836, and program data 837.

The computer 810 may also include other removable/non-removable volatile/nonvolatile computer storage media. By way of example only, FIG. 26 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 26, provide storage of computer readable instructions, data structures, program modules and other data for the computer 810. In FIG. 26, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 26 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An agricultural machine (100), comprising:
an applicator (109) that has an actuator (254) that is actuated to control application of liquid material to a surface (406) over which the agricultural machine travels;
a ground speed sensor (304) configured to detect ground speed (328) of the agricultural machine and generate a ground speed signal indicative of the ground speed; and
a control system (113) configured identify a target application pattern (260) for the liquid material and generate a pulse width modulated actuator control signal (702), to control the actuator, at a switching frequency (322) based on the ground speed signal and the target application pattern.

2. The agricultural machine of claim 1, wherein the control system comprises:
an actuation frequency generator configured to identify the target application pattern for
the liquid material and a duty cycle for the pulse width modulated actuator control signal.

3. The agricultural machine of claim 1 or 2 wherein the control system comprises:
a frequency controller configured to compute the switching frequency for the pulse width
modulated actuator control signal based on the ground speed and the target application
pattern; and
a control signal generator configured to control the actuator with the pulse width modulated actuator control signal at the switching frequency and having the identified duty cycle.

4. The agricultural machine of one of the claims 1 to 4, wherein the applicator comprises:
a valve driven by the actuator; and
a spray tip, wherein the valve, when opened by the actuator, is configured to provide the
liquid material to the spray tip which outputs the liquid material in an area defined by a
spray angle, wherein the frequency controller is configured to compute the switching frequency based on the spray angle.

5. A method, comprising an agricultural machine (100) according to one of the claims 1 to 4, the method further comprising:
detecting (362) ground speed of an agricultural machine that has an actuator that is actuated to control application of liquid material to a surface over which the agricultural machine travels;
identifying (350) a target application pattern for the liquid material;
identifying (348) a pulse width modulated actuator control signal duty cycle;
determining (364) a switching frequency for the pulse width modulated actuator control signal based on the ground speed and the target application pattern; and
controlling (366) the actuator with the pulse width modulated actuator control signal at the switching frequency and having the identified duty cycle.

6. The method of claim 5, wherein the actuator controls a valve that opens to provide the liquid material to a spray tip and further comprising:
accessing spray tip data indicative of a spray dispersion pattern of the liquid material output from the spray tip.

7. The method of claim 5 or 6, wherein determining the switching frequency comprises: determining the switching frequency based on the spray dispersion pattern or based on the identified duty cycle.

8. The method of one of the claims 5 to 7, and further comprising:
repeating the steps of detecting ground speed and determining the switching frequency
during an application operation performed by the agricultural machine.

9. The method of one of the claims 5 to 8, wherein the agricultural machine comprises an implement with a set of row units, each row unit having a separate, corresponding actuator and wherein detecting ground speed comprises:
detecting a ground speed corresponding to each row unit.

10. The method of claim 9, wherein determining the switching frequency comprises:
for each row unit, determining a switching frequency for the actuator corresponding to
the row unit based on the ground speed corresponding to the row unit.

11. The method of one of the claims 5 to 10, wherein the target application pattern comprises
a discontinuous application pattern and wherein determining a switching frequency comprises:
determining a switching frequency that will cause the actuator to apply the liquid material according to the discontinuous application pattern on the surface, based on the detected ground speed.

12. The method of one of the claims 5 to 11, wherein the target application pattern comprises a continuous application pattern and wherein determining a switching frequency comprises:
determining a switching frequency that will cause the actuator to apply the liquid material according to the continuous application pattern on the surface, based on the detected ground speed.

13. The method of one of the claims 5 to 12, wherein the target application pattern comprises a desired overlapping application pattern and wherein determining a switching frequency comprises:
determining a switching frequency that will cause the actuator to apply the liquid material according to the desired overlapping application pattern on the surface, based on the detected ground speed.

14. The method of one of the claims 5 to 13, and further comprising:
detecting a different target application pattern; and
determining the switching frequency based on the ground speed and the different application pattern.

15. The method of one of the claims 5 to 14, and further comprising:
identifying a different pulse width modulated actuator control signal duty cycle; and
determining the switching frequency based on the ground speed and the different duty cycle.
